(19) **Europäisches Patentamt / European Patent Office / Office européen des brevets**

(11) **EP 1 873 612 A1**

(12) **EUROPEAN PATENT APPLICATION**

(43) Date of publication:
02.01.2008 Bulletin 2008/01

(51) Int Cl.:
*G06F 1/03* (2006.01)   *G06F 1/035* (2006.01)

(21) Application number: 07101550.7

(22) Date of filing: 01.02.2007

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 29.06.2006 IL 17665206

(71) Applicant: **Elisra Electronic Systems Ltd.**
**51203 Bene Beraq (IL)**

(72) Inventor: **Holtzman, Ronen**
**58481 Holon (IL)**

(74) Representative: **Milanov, Nina Vendela Maria**
**Awapatent AB**
**P.O. Box 5117**
**200 71 Malmö (SE)**

(54) **Phase-coherent signal generator**

(57) A method is provided for insuring phase-coherency of a sinusoidal signal when changes occur in the signal's frequency. The method includes generation of a phase word that is used for accessing entries in relatively small Sin(x) and Cos(x) Look-Up-Tables (LUTs), which may represent values of a sinusoidal signal. The Cos(x) LUT may be used for generating a phase-related error data that may be added to a corresponding entry of the Sin(x) LUT to derive a value that is translated by a digital-to-analog converter into a corresponding analog value of the generated sinusoidal signal. The phase word may be obtained by multiplying a time word with a frequency word. The frequency word may control the signal's frequency and the phase word may maintain phase coherency. A signal generator is also provided, which utilizes the method.

FIG.8

EP 1 873 612 A1

**Description**

**FIELD OF THE DISCLOSURE**

The present disclosure generally relates to the field of frequency synthesizers. More specifically, the present disclosure relates to a method and apparatus for generating phase-coherent broadband tunable frequencies.

**BACKGROUND**

Synthesizers are designed and used to generate signals in a broad spectrum of frequencies while enabling rapid switching between frequencies selected within that spectrum. Traditional analog synthesizers have long been replaced by digital synthesizers, which are generically named Direct Digital Synthesizers (DDS). Modern DDS are increasingly used due to low cost, ease of frequency control, high switching speed from one frequency to another and the ability to precisely tune the DDS to any selected frequency within a very wide frequency spectrum. There are available devices that can, for example, generate signals with frequencies in an operational band of 40 MHz and with resolution of 0.1 Hz (≤ 0.01 Pans Per Million (PPM)). Today, DDS frequency generations are cost effective and competitive; they introduce high performance and can be funcTionally integrated in small sized packages. The integration of high-speed high performance digital to analog converter (DAC) and DDS architecture onto a single electronic Integrated Circuit (IC) chip, thus forming what is commonly known as a Complete-DDS solution, enables to 'compress' a wide range of applications into economical and densely packaged systems and modules.

Thanks to its many advantages, DDSs are more and more used by electronic circuits architects and designers, especially where agile frequency shift(s) or changes are required Other signal generation techniques (other than DDS techniques) typically use some sort of an oscillator to generate an initial signal that is further manipulated or controlled by a frequency synthesizer. Since, by nature, oscillators run freely, there is no control over the phase of the signal that they generate. Therefore, if, at a certain instant, it is desired to switch the frequency of an analog synthesizer from one frequency to another, an unwanted phase change will occur often. DDS-based solutions are unique in this respect, as DDS circuits are digitally deterministic in their structure. That is, instead of using an oscillator to generate a signal with un-controllable phase, the DDS-based circuits synthesize new output signals to obtain some control over the signal's phase. Several circuit designs for frequency generation and control may be adopted by a circuit designer, ranging from Phased Locked Loops (PLL) based techniques to dynamic programming of digital to analog converter (DAC) based systems

The basic principles of DDS have substantially remained the same for years A DDS signal generator operates by storing in a memory, in a digital format, selected points representative of a complete cycle of a waveform, and recalling stored points from the memory, in a cyclic manner (to replicate a single cycle), to generate the wanted waveform. The rate in which the synthesizer completes a complete cycle of the waveform governs the frequency of the generated wave the faster the synthesizen completes a cycle, the higher the frequency.

A conventional DDS architecture is typically based on a phase accumulator, a mapping device and a DAC. A phase accumulator is an arithmetic device that discretely performs the mathematical integration $S_n = S_{n-1} + d$, where '$S_n$' is a new phase value, $S_{n-1}$' is a phase value preceding $S_n$ and '$d$' is a phase increment This means that during a discrete integration, a new (next) phase ($S_n$), may be created by taking the last calculated phase value ($S_{n-1}$), and adding to it a phase increment ($d$). Two basic DDS phase accumulator structures were developed and may co-exist in the market. One DDS phase accumulator directly manipulates binary data and the other DDS phase accumulator operates with decimal values, by accumulating data in a binary coded decimal (BCD) format

The DDS memory unit (mapping device) performs the non-linear transformation, or conversion, of each value of $x = w*t$ (the phase argument, where $w = 2\pi * f$ and '$f$' is the frequency) into a corresponding value $Sin(x)$. This function is usually implemented using a lookup table (LUT) where each $x$ value has a corresponding $Sin(x)$ value. $x$ and $Sin(x)$ values are often stored in ROM/RAM memory components.

Applications that exploit DDS units roughly fall into two categories. The first category includes communication applications that use DDS unit(s) as building block(s) for of providing agile (immediate response) frequency sources. The second category includes many applications in the industrial and biomedical fields, where a DDS is implemented as a programmable waveform generator module, as it permits simple adjustments of frequencies in real time, a feature highly required in may of such applications. A DDS frequency generator is digitally programmable, which allows the phase of the and in the general the signal's waveform, to be easily adjusted without needing to change hardware components, as opposed to traditional analog programmed waveform generators.

DDS structure and related performance may be adapted to obtain a required signal phase Generation of a typical signal by a DDS frequency generator usually involves the generation of successive sinusoidal signals, where two adjacent sinusoidal signals have different frequencies (f) for a designated duration (ΔT) While DDS frequency generators may function well in some applications in terms of phase properties, additional efforts are still required to further improve aspects of the signal's phase when DDS frequency generators are used in certain applications and, in particular in Radar (Radio Detection and Ranging) simulations,

For Radar pulse synthesis, for example, it is necessary to comply with quite a wide frequency operational band and very high degree of spectral purity to support stringent requirements associated with the correct dynamics of a Radar system. The DDS frequency generator has to comply with stringent specifications which means, in general , that the DDS frequency generator has to output a signal with very accurate frequency and amplitude modulation, for facilitating accurate intra-pulse modulation. Modern Radar simulation applications usually require phase coherency, which implies that it is also required to precisely control the phase of the signal output by the DDS frequency generator

For a synthesizer to be phase coherent it is required that when the frequency of the DDS signal shifts from one value (for example f1) to another (for example f2) and then back to the original value (f1), the phase of the DDS signal, when its frequency changes back from f2 to f1, should retain the phase value of the original frequency (f1) as if there the frequency changes (from f1 to f2 and back to f1) never occurred.

The concept of phase-coherent waveforms and continuous phase waveforms can now be introduced. The phase of a low frequency signal changes relatively slowly, whereas the phase of a high-frequency signal changes relatively fast. These two reference signals may oscillate without any interruption and shall be used as a reference for the sake of explanation. A third signal may start as a high-frequency signal and it may have the same phase as the high-frequency reference signal. After some time the signal's frequency may switch from high frequency to low frequency. At this time, the signal has the same phase as the reference low-frequency signal. After some more time lapses, the signal frequency may resume its high frequency Again, the signal has the same phase as the high-frequency reference signal. This type of waveform is called a phase-coherent waveform since this type of waveform always has the phase of the reference signals involved. As a result of this behavior of the phase, there might be a phase jumps during transitions from one frequency to another, which results in non-continuous phase.

The frequency of a fourth signal may switch from high value to low value and resume the high value. However, the fourth signal may have a smooth (continues) phase In a signal whose phase is continuous, changing the signals frequency from one value to another results in the signal's phase differing from the phase value of any of the reference signals involved. This kind of waveform is called in the art a 'continuous-phase waveform'. This type of phase behavior is very problematic to many applications such as radar applications. From the fourth signal characteristics it can be understood that, when jumping between several frequencies, each time the signal resumes one of its the several frequencies, it has a phase that is different than the phase of the resumed frequency

There is another significant requirement, and therefore a corresponding design parameter, that must be taken care of by a system designer, in order to achieve a better performance, as required by applications such as Radar simulation systems. Obtaining both a low dwell time and, at the same time, good frequency resolution, is complicated. A dwell time is defined as the time length between the starting instants of two signals with different frequency and it is reversely proportional to the frequency hopping rate

In addition, output signals of a high quality system require many bits to define both w*t and Sin(Wt). Therefore, a large memory space is highly required to support the storage needs of the digitized data stored in a lookup table which is required for reconstructing the w*t and Sin(wt) functions Since retrieving data from a memory device is the slowest process in such a signal processing chain and huge memories consume a lot of physical space, a new approach had to be found.

Commercially available DDS frequency generators are based on an architecture that typically includes a Phase Accumulator (hereinafter called an accumulator). The accumulator's output value is periodically increased by a constant step size (on the 0÷360°cycle), The larger the step size the higher the signal's frequency. The accumulator's value is used to generate a Phase Word. The Phase Word is fed to a Sin(x) Look Up Table (LUT). The Sin(x) LUT converts the phase word into an amplitude word and the LUT's output is fed to a DAC to generate a corresponding analog signal. When a low frequency generation is required, the Accumulator's output is increased in relatively small steps. When a higher frequency generation is required, the Accumulator's output is increased in larger steps Therefore, in such DDS devices, the value of the DDS's output frequency can be controlled (changed) by varying the Accumulator's output step size

Using the above-described phase accumulator mechanism results in a signal having a continuous phase, which means that whenever a frequency change occurs, the phase of the signal continues from the phase value stored in the Phase Accumulator. As is explained earlier, continuous phase is an unwanted quality in some applications such as in Radar related applications. It is therefore clear that conventional DDS devices, which utilize phase accumulators, are inherently non-phase coherent, though for these types of applications phase coherency is a must.

Several methods for overcoming the non-coherent behavior of the phase accumulator based DDS circuits were previously suggested and implemented in operational circuits Some of these methods require that the phase accumulator be reset at a pre-determined rate. This approach may work only if and as long as the dwell time for each frequency and frequency jump(s) aligns with the system reset cycle time. This means that the performance of DDS frequency generators in such a configuration is limited to low hopping rate at specified times. Other methods are based on calculating the required phase for a new given frequency and then modifying the phase accumulator value to comply with the calculated required phase value. This approach is also limiting the frequency hopping rate of the device, because the new required phase-value calculation time, together with the associated phase modification cycle time require a comparatively long dwell time, that, again, limits the frequency hopping rate, or switching speed of the related DDS.

Architecture, called by its author Multiplying Digital Synthesizer (MDS) which enables the generation of phase-coherent signal useful, for example, in Radar and similar application, was previously introduced. The MDS architecture is not using a phase-accumulator. Instead, the MDS architecture uses a phase-counter that is connected to a Sine(x) sampled LUT which is stored in a memory module. The main drawback of this architecture is that, for small frequency steps (such as 1Hz, which is commonly used in many applications), the size of the LUT is very large (it typically includes 100 million entries and, sometimes, even more). Such LUTs are impractical for commercial use due to the costs and sizes of the memory required, and because of the relatively slow memory access time associated with the size of LUT.

GLOSSARY

PLL (Phased locked loop)- An electronic circuit that typically consists of a phase/frequency detector (PFD), low pass filter (LPF), and voltage-controlled oscillator (VCO), PLLs generate a waveform that has phase coherence to a reference waveform by using a feedback loop to control the phase locking process. PLLs are relatively slow by nature, and they do not support or enable fast frequency hopping.

DAC (Digital to Analog Converter) - A device or a circuit that converts a digital representation of a certain parameter (for example voltage or current) value into an analog level presentation of that value.

LAN -(Local Area Network), a localized data communication network supporting data communication among a plurality of computer terminals and also supporting the sharing of common network resources, such a memory and input and output (I/O) devices.

Phase Accumulator - An electronic arithmetic circuit used to accumulate and store the value of the synthesizer signal's phase

Sin(x) Look Up Table (LUT) - A lookup table for storing, in a digital format, a set of discrete values of a sampled sinusoidal signal or a set of values calculated using the Sin(x) function. The function is sampled for a discrete number of N values. interspaced by a predefined delta X ($\Delta X$) incremental number.

Most Significant (n) Bits (MSBs). The most significant n number of bits, taken from left to right in a binary representation of a number,

A multiplier - A device or an electronic circuit that takes in the value of at least two inputs and generales a signal at its output that is the result of the inputs values multiplication by each other

Modulus 2° Operator - a numeric operator that is implied on sets of number in such a way that the resultant value is a reminder obtained by dividing these numbers by the value of the operator.

Low Pass Filter (LPF) - Is an electronic frequency filtering circuit that passes substantially only designated low frequency content of input signal(s) while it attenuates drastically the higher frequencies content of the input signal.

There is thus a long-felt need in the art for improved digital frequency synthesizers for generating phase-coherent frequency signals with high frequency resolution and within a broad spectral range

**SUMMARY**

The following embodiments and aspects thereof are described and illustrated in conjunction with systems, devices and methods, which are meant to be exemplary and illustrative, not limiting in scope. In various embodiments, one or more of the above-described problems have been reduced or eliminated, while other embodiments are directed to other advantageous or improvements.

A method is provided for insuring phase-coherency of a sinusoidal signal when changes occur in the signal's frequency. As part of the disclosure a phase word may be generated, which may be used for accessing entries in a relatively small Sin(x) and Cos(x) Look-Up-Tables (LUTs), which may represent values of a sinusoidal signal The Cos (x) LUT may be used for generating a phase-related error data that may be added to a corresponding entry of the Sin (x) LUT to derive a value that is translated by a digital-to-analog into a corresponding analog value of the generated sinusoidal signal According to an embodiment the phase word may be obtained by multiplying a time word with a frequency word. The frequency word may control the signal's frequency and the phase word may be utilized for maintaining phase coherency.

An apparatus is also provided, which may utilize the method. As part of the disclosure the apparatus may include a digital-to-analog converter adapted to receive a value derived from an entry in a Sin(x) LUT and an entry in a Cos(x) LUT. The value may be derived by an adder that sums up the Sin(x) LUT (a first lookup table) entry value and a phase-related error data.

The apparatus may further include a phase multiplier adapted to generate the phase word and a phase error multiplier adapted to generate the phase-related error data by multiplying a second portion of said phase word with a value in the second lookup table entry. The phase multiplier may generate the phase word by multiplying a time word with a frequency word.

In addition to the exemplary aspects and embodiments described above, further aspects and embodiments will become apparent by reference to the figures and by study of the following detailed description.

## BRIEF DESCRIPTION OF THE FIGURES

Exemplary embodiments are illustrated in referenced figures. It is intended that the embodiments and figures disclosed herein be considered illustrative, rather than restrictive. The disclosure, however, both as to organization and method of operation, together with objects, features, and advantages thereof, may best be understood by to the following detailed description when read with the accompanying figures, in which:

Fig. I is a high-level block diagram of a conventional DDS frequency generator;
Fig. 2 exemplifies a typical DDS non-coherent type output signal with transitions between several exemplary frequencies, for demonstrating phase continuity,
Fig. 3 is an exemplary graph showing phase changes as a function of time in a non-phase coherent DDS;
Fig 4 is an exemplary graph showing phase changes as a function of time in a phase coherent DDS;
Fig. 5 demonstrates the difference between phase continuous waveform and phase coherent (non-continuous) waveform;
Fig 6 (prior art) is a bigh-lovel block diagram of a multiplying digital synthesizer
Fig. 7 schematically illustrates the general layout and functionality of a DDS frequency generator according to an embodiment of the present disclosure; and
Fig 8 shows a high-level flowchart for generating a phase coherent signal according to an embodiment of the present disclosure

It will be appreciated that for simplicity and clarity of illustration, elements shown in the figures have not necessarily been drawn to scale For example, the dimensions of some of the elements may be exaggerated relative to other elements for clarity, Further, where considered appropriate, reference numerals may be repeated among the figures to indicate corresponding or analogous elements.

## DETAILED DESCRIPTION

In the following detailed description, numerous specific details are set forth in order to provide a thorough understanding of the disclosure. However, it will be understood by those skilled in the art that the present disclosure may be practiced without these specific details. In Other instances, well-known methods, procedures, components and circuits have not been described in detail so as not to obscure the present disclosure.

Unless specifically stated otherwise, as apparent from the following discussions, it is appreciated that throughout the specification discussions utilizing terms such as "processing", "computing". "calculating", "determining", or the like, refer to the action and/or processes of a computer device, a computer or computing system, or similar electronic computing devices, that manipulate and/or transform data represented as physical. such as electronic, quantities within the computing system's registers and/or memories into other data similarly represented as physical quantities within the computing system's memories, registers or other such information storage, transmission or display devices

The present disclosure may take the form of an entirely hardware embodiment, an entirely software embodiment or an embodiment containing both hardware and software elements. In a preferred embodiment, the disclosure is implemented in an embodiment containing both hardware and software elements, which includes but is not limited to firmware, resident software, microcode, and so on.

Embodiments of the present disclosure may include apparatuses and devices for performing the operations described herein This apparatus and devices may be specially constructed for the desired purposes, or it may comprise a general purpose computer selectively activated or reconfigured by a computer program stored in the computer.

Furthermore, the disclosure may take the form of a computer program product accessible from a computer-usable or computer-readable medium providing program code for use by or in connection with a computer or any instruction execution system For the purposes of this description, a computer-usable or computer readable medium can be any apparatus or device that can contain, store, communicate, propagate, or transport the program for use by or in connection with the instruction execution system, apparatus, or device.

A data processing system suitable for storing and/or executing program code may include at least one processor coupled directly or indirectly to memory elements through a system bus. The memory elements may include local memory employed during actual execution of the program code, bulk storage, and cache memories which provide temporary storage of at least some program code in order to reduce the number of times code has to be retrieved from bulk storage during execution, Input/output or I/O devices (including but not limited to keyboards, displays, pointing devices, and so on) can be coupled to the system either directly or through intervening I/O controllers.

The processes presented herein are not inherently related to any particular device or other apparatus Various general purpose systems may be used with programs in accordance with the teachings herein, or it may prove convenient to construct a more specialized device to perform the desired method. The desired structure for a variety of there systems will appear from the description below In addition, embodiments of the present disclosure are not described with reference to any particular programming language It will be appreciated that a variety of programming languages may be used to implement the teachings of the disclosures as described herein.

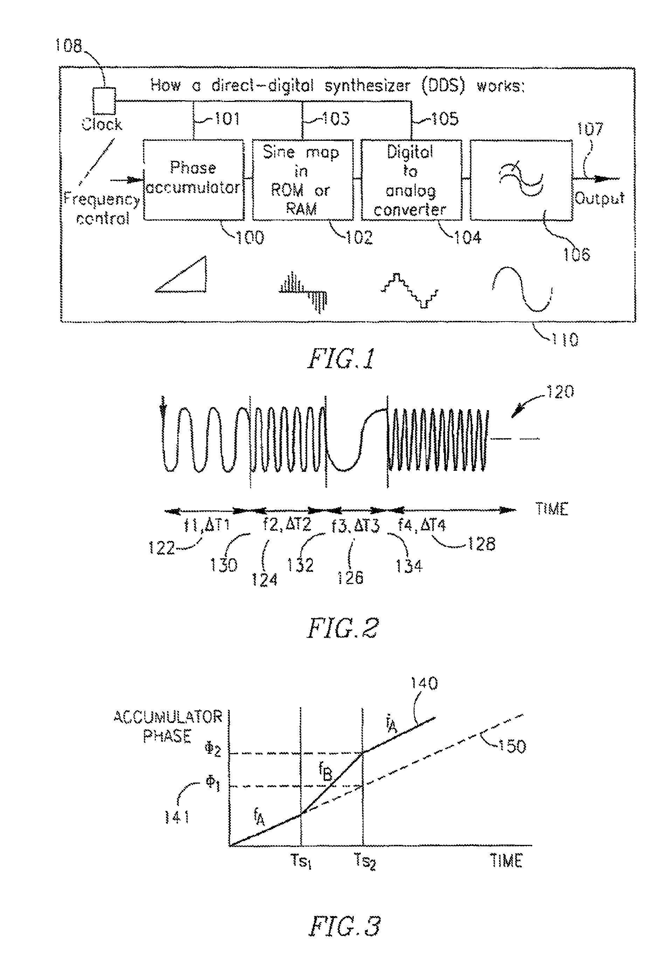

Referring now to Fig. 1 (prior art), it schematically illustrates an exemplary DDS frequency generator. A conventional DDS architecture (generally shown at 110) is illustrated in Figure 1, which is based on three basic active components common to most known types of DDS; a phase accumulator (shown at 100), a mapping device (shown at 102) and a DAC (shown at 104), all of which are timely controlled (driven) by a common clock generator (shown at 108). Clock generator 108 is shown connected to phase accumulator 100, mapping device 102 and to DAC 104 (shown at 101, 103 and 105, respectively).

Phase accumulator 102 is an arithmetic device that performs the discrete function Sn-Sn-1 + d, which means that, during the discrete integration the value (Sn) of the new phase representing parameter is computed by incrementing the previously computed phase value Sn-1 by using some known increment value (d). Two basic DDS phase accumulator structures exist in the market, one of which is designed to directly manipulate binary data and the other is designed to manipulate decimal values by accumulating data in a binary coded decimal (BCD) format.

Memory unit 102, or mapping device 102, performs non-linear transformation of w*t to corresponding Sin(w*t). This function is usually implemented with the use of Read Only Memory (ROM) or Random Access Memory (RAM) based lookup tables (LUIs) that contain a plurality of table entries, each of which containing a w*t value and a corresponding Sin(w*t) value associated with the w*t value. For example, an entry of memory unit 102 may include the value w*t=$\pi$/2 (in radians) and an associated value 0.50 (sin($\pi$/2) = 0.50). Typical, the plurality of w*t values (and the respective Sin(w*t) values) are arranged in the memory unit 102 in such as way that, when the LUT en ries are visited from one end of the LUT to the other end of the LUT, sinusoidal cycle(s) will be formed

DAC unit 104 consists of a switch matrix and several current somces. DAC unit 104 is considered in many cases as the performance limiting factor of DDS frequency generators, because DACs conversion time (from a digital value to an analog value) is often considerable, which limits the upper frequency limit of signals generated by DDS frequency generators. Filter 106 filters out unwanted frequency content in the output of DAC 104, for generating a pure single frequency signal at the output (shown at 107) of DDS 110

Referring now to Fig. 2, a typical DDS's non-coherent (continuous) output signal with transitions between several exemplary Frequencies is exemplified. Sinusoidal signal 120 is an exemplary signal that may be generated by a DDS frequency generator such as DDS frequency generator 110. Signal 120 is shown having four different frequencies (f1, f2, f3 and f4), each of which lasts for respective time duration ($\Delta T_1$, i=1,2,3,4): frequency f1 (shown at 122) for duration $\Delta T_1$. frequency f2 (shown at 124) for duration $\Delta T_2$, frequency f3 (shown at 126) for duration $\Delta T_3$, and frequency f4 (shown at 128) for duration $\Delta T_4$ As is demonstrated by Fig. 2, there are no phase dis continuities at the frequency transition instants 130, 132 and 134

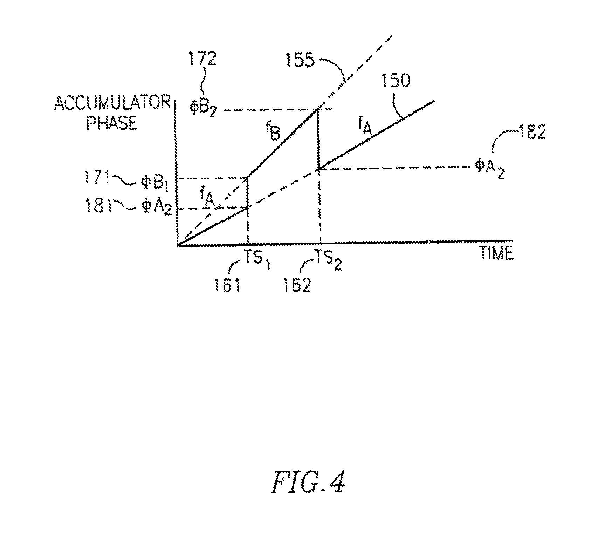

Referring now to Fig. 3, an exemplary graph (generally shown at 140) showing phase changes as a function of time in a non phase-coherent DDS is shown. Graph 140 shows changes in a signal's phase as a function of time, during which time the signal's frequency switches twice: from frequency $f_A$ to $f_B$ (at instant $T_{S1}$), and back, from $f_B$ to $f_A$ (at instant $T_{S2}$). As is demonstrated by graph 140, there are no phase discontinuities in the associated non-coherent signal at the frequency transition instants $T_{S1}$ and $T_{S3}$, However, as is explained earlier, some applications (for example most Radar applications) require that, when the signal's frequency returns, for example from $f_B$ to $f_1$. (at instant $T_{s2}$), the phase of the signal at the transition instant $T_{s1}$ resume its expected value, as if the frequency transitions (at instants $T_{S1}$ and $T_{S2}$) never occurred, as is reflected in dotted line 150. The latter mode of operation, which is more fully described in association with Fig. 4, is referred to herein and in the field of frequency synthesizers as phase coherency. Phase coherency means that the phase value of signal generated by a frequency synthesizer after it resumes (at instants $T_{S2}$) its original frequency ($f_1$ in example shown in Fig. 3) would have been $\phi_1$ (shown at 141), as opposed to the phase value $\phi_2$ (shown at 142) in a continuous (non-coherent) phase frequency generator.

Referring now to Fig. 4, an exemplary graph showing phase changes as a function of time in a phase coherent DDS frequency generator is shown For the sake of demonstration it is assumed that a frequency synthesizer (not shown) simultaneously generates two signals with different frequencies, $f_A$ (a frequency associated with phase graph 150) and $f_B$ (a frequency associated with phase dotted graph 155), and outputs a 2-frequency signal by switching between the two frequencies, as is shown in Fig. 4. It is also assumed, for simplicity, that the phase value of the two generated frequencies $f_A$ and $f_B$ is zero (shown at 153) at I=0. The phase value of frequency $f_A$ is shown in Fig. 4 increasing slower than the phase value of frequency $f_B$ because, according to this example, $f_A < f_B$. If the signal's frequency were kept $f_A$,

then the signal's phase would have been linearly increased (from zero, shown at 153) along line 150 If, however, the signal's frequency were kept $f_B$, then the signal's phase would have been linearly int reased (from zero, shown at 153) along line 155,

However, at instant $T_{s1}$ (shown at 161) the frequency synthesizer (not shown) swiches frequencies, from $f_A$ to $f_B$ in such a way that the phase value of the signal becomes the val ue $\phi_{s0}$ (shown at 171), which is the value expected at $T_{s1}$ (shown at 161) for $f_a$, as opposed to the value $\phi_{A1}$ (shown at 181) which is the value of $f_A$. In this respect, it may be said that the signal with the frequency $f_a$ has resumed its (expected phase value), as switching from $f_A$ to $f_B$ is accompanied by phase discontinuity (phase coherency) which results from the signal switching from phase line 150 (associated with $f_A$, to phase line 155 (associated with $f_B$) Likewise, at instant $T_{s2}$ (shown at 162) the frequency synthesizer switches frequencies, now from $f_B$ to $f_A$ in such a way that the phase of the signal, which now has the value $\phi_{a1}$ (shown at 172) assumes the value $\phi_c$ (shown at 182), which is the value expected at $T_{S2}$ (shown at 162) for $f_A$- In this respect, it may be said that the signal with the frequency $f_A$ has resumed its expected phase, because switching from $f_B$ to $f_A$ is accompanied by a phase discontinuity (phase coherency) which results from the signal switching back from phase line 155 (associated with $f_B$) to phase line 150 (associated with $f_A$)

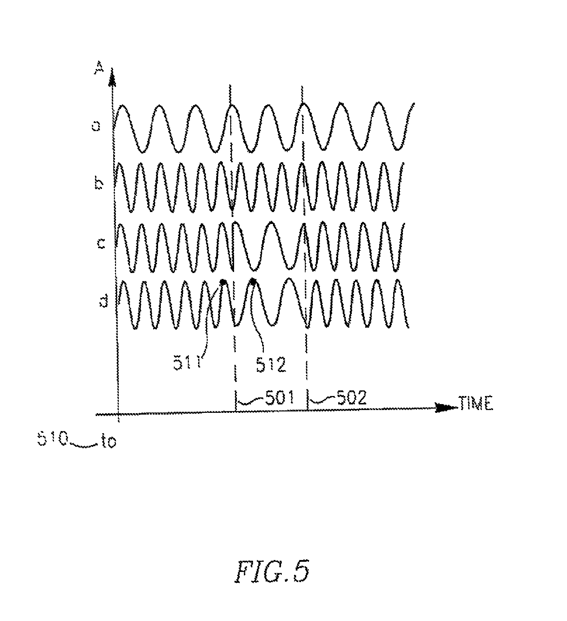

Fig. 4 shows a significant requirement and therefore a design parameter that must be taken care of by a system designer. in order to achieve a better performance, as required, for example, for applications related to Radar simulation systems. Obtaining both a low dwell time, fast frequency hopping and in parallel fine frequency resolution, is no a trivial thing The implications of phase-coherency and phase-continuity will now be shown and described in association with Fig. 5.

Referring now to Fig, 5, the difference between phase continuous waveform and phase coherent (non-continuous) waveform is demonstrated. Four different exemplary sinusoidal signals are shown. Signal "a" is a low-frequency signal and therefore its phase changes relatively slowly. Signal "b" is a higher-frequency signal and therefore its phase changes faster than the phase of signal "a". Signals "a" and "b" freely run (oscillate) with our any interruption(s) and shall be used, for the sake of simplicity, as reference signals. Signal c starts (from instant $f_0$, shown at 510) as a high-frequency signal (signal "c" it follows reference signal "b") and, therefore, its phase follows (equals) the changing phase of high-frequency reference signal "b". At time instant 501, signal "c" switches from high-frequency reference signal "b" to low-frequency reference signal "a". At time instant 501, therefore, the phase of signal "c" follows (equals) the phase of low-frequency reference signal "a". At time instant 502, signal "c" switches back to the high-frequency reference signal "b" Again, signal "c" has the same phase as the high-frequency reference signal b Signal "c" is called, therefore, a phase-coherent waveform because the phase of signal "c" always resumes (at the frequency switching instant(s)) the phase of the reference signal to which signal "c" (or the frequency synthesizer not shown) As a result of the phase behavior demonstrated by signal "c", jump(s) are expected to occur in the phase of signal "c" during transition(s) between two frequencies and the signal's phase, in such cases, is not continuous.

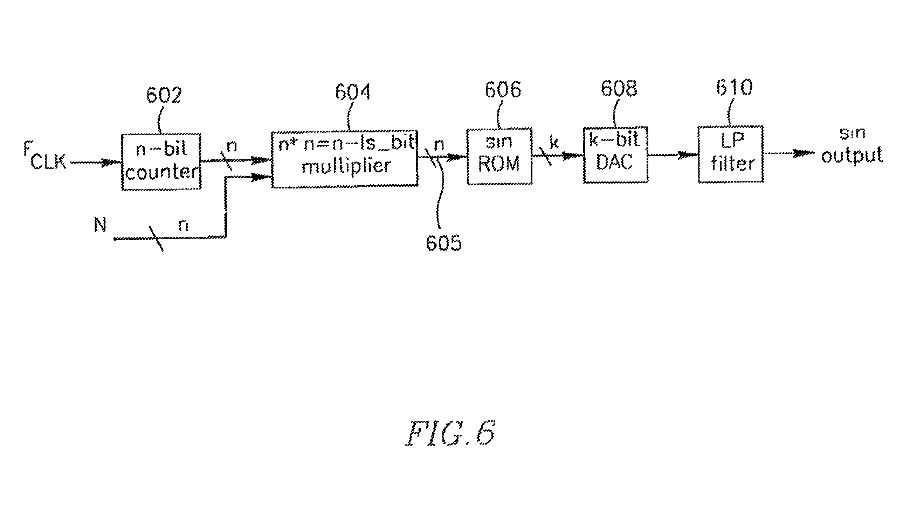

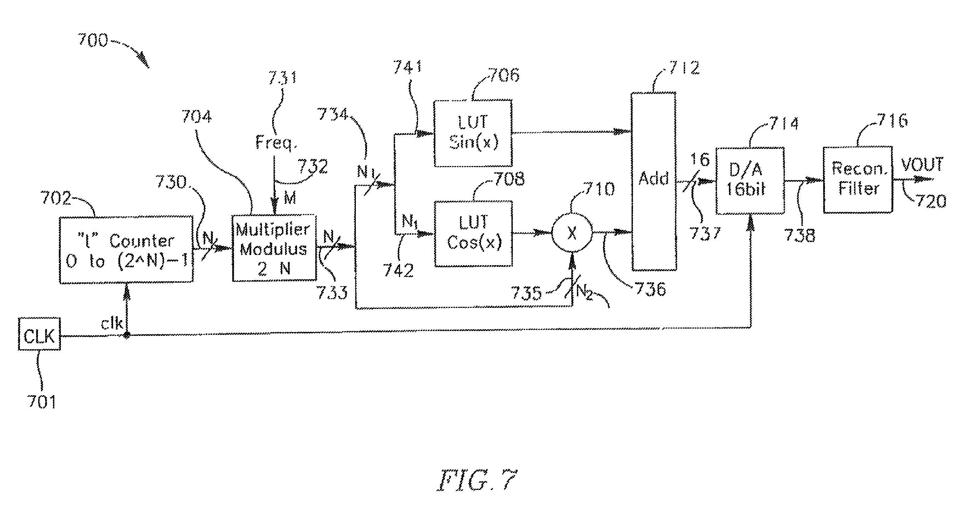

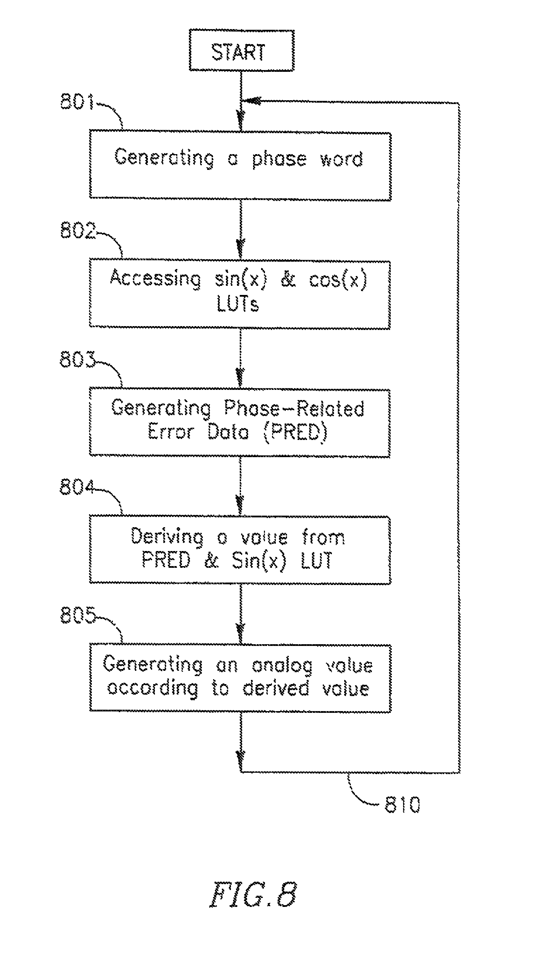

Signal d also witches, at time instant 501, from high-frequency reference signal b to low-frequency reference signal and back to high-frequency reference signal b (at time instant 502). However, signal d has a smooth (continues) phase behavior. When the frequency of signal d changes to a new frequency, signal d does not have the same phase as the reference signals a or b, because some portion(s) of signal d around the tramsition(s) time instant(s) has/have temporal characteristics (shape) that matches neither reference signal a nor reference signal b. An exemplary portion that does not match the shape of reference signals and/or b is the portion confined between peaks 511 and 512. This type of phase behavior is problematic to many applications such as radars. Signal d demonstrates that whenever the frequency of a signal switches from one frequency to another and back to the previous frequency, the signal returns to the previous frequency with an unexpected (unknown or arbitrary) phase. A traditional frequency synthesizer wh ch enables the generation of phase-coherent signals was is shown in Fig. 6 (prior art).

Referring now to Fig. 6 (prior art), a high-level block diagram of a digital frequency synthesizer (generally shown at 600) is shown and described. Frequency synthesizer 600 includes an n-bit phase counter (shown at 602), an n-bit multiplier (k-bit shown at 604), a Sin(x) LUT (shown at 606). DAC (shown at 608) and LPF (shown at 610), Frequency synthesizer 600 does not use a phase accumulator, Instead, frequency synthesizer 600 uses multiplier 604 that feeds (shown at 605) Sin(x) LUT 606 that can be stored, for example, in a ROM device. The main drawback of a frequency synthesizer such as frequency synthesizer 600 is that for fine frequency steps (such as 1Hz steps, which is commonly used in some applications) the LUT gets huge in memory space because of the huge number of w*t values (and also the associated Sin(w*t) values) that is required for such fine frequency resolution For example, in a commonly used Mega Hertz (MHz) frequency range, as many as 100 million lines, or entries (and some times even more than that) are required to be stored in a LUT. LUTs of that size are often impractical for commercial use.

Referring now to Fig. 7 a general layout and functionality of a DDS frequency synthesizer (generally shown at 700 is schematically illustrated according to an embodiment of the present disclosure. DDS frequency synthesizer 700 includes a clock pulse generator (CLK, shown at 701), time-counter (shown at 702), phase multiplier (Multiplier Modulus $2^N$, shown at 704). Sin(x) LUT (a first lookup table, shown at 706), Cos(x) LUT (a second lookup table, shown at 708), a phase-related error multiplier (shown at 710), an adder (Add, shown at 712), DAC 714 and reconstruction (LPF) filter 716. DDS frequency synthesizer 700 inherently generates phase-coherent signals with no need for alignment or resetting of the signal's phase, as is explained hereinafter.

Let the required frequency resolution, or incremental changes step (the space between each two adjacent frequencies within the operating frequency range of DDS frequency synthesizer 700), be designated $F_{LSB}$, For example, $F_{LSD}$ may equal 1Hz. For the sake of simplicity external clock pulse generator 701 is shown in Fig. 7 driving both time-counter 702, which outputs an N-bit time word (shown at 730), and DAC 714, though a first external clock pulse generator may drive time-counter 702 and a second clock pulse generator may drive DAC 714. For the sake of simplicity, (the same) clock pulse generator 701 outputs also drives DAC 714. For practical reasons, a faster clock pulse generator is preferably used for driving time-counter 702 in order to reduce the set ling time of the DDS.

Assuming DDS frequency synthesizer 700 is required to cover a frequency range from near DC to $F_{max}$, the frequency of the clock pulse generator (CLK 701 in Fig 7) that drives DAC 714 has to be at least twice the value of $F_{max}$ (in according with Nyquist's sampling Law). The frequency ($F_{CLK}$) of CLK 701 may be select to be:

$$F_{CIK} = 2^N \cdot F_{LSB} \qquad (1)$$

where N is the number of binary bits required to comply with Nyquist's sampling law and to satisfy expression (1) above.

For example, a DDS (such as DDS 700) that is required to cover the frequency of near DC to 50 MHz shall be driven by a clock generator whose frequency $F_{cik} = 2^{11} *1 \equiv 134$ MHz, because, in this example, the smallest number (N, shown also at 730) of binary bits that are require for obtaining such a frequency ($F_{CIK}$) is N=27, because, with N=26 $F_{CIK} \cong 67$ MHz (which does not comply with Nyquist's sampling law), and with N=28 $F_{CIK} \equiv 268$ MHz (which corresponds to a sampling rate that is much faster than is practically required). External clock 701 causes the time-counter 702 to count from 0 to $2^N - 1$. after which the counter's value returns to zero, for which reason the counting range $2^N$ of time-counter 702 can be used for generating one cycle of the synthesized signal. The time length $(Ta_x)$ of each cycle of CLK 701 can be calculated in the following way:

$$T_{CIK} = \frac{1}{F_{CIK}} \qquad (2)$$

Therefore, the time length $T_{SYN}$ of each cycle of the synthesized signal (at the output 720 of DDS frequency generator 700) equals:

$$T_{SYN} = T_{CIK} * 2^N = \frac{1}{F_{CIK}} * 2^N \qquad (3)$$

From expressions (2) and (3) one may get:

$$T_{SYN} = \frac{1}{F_{CIK}} * 2^N = \frac{2^N}{2^N * F_{LSB}} = \frac{1}{F_{LSB}} \qquad (4)$$

Expression (4) implies that, for a given external frequency $F_{CIs}$, time-counter 701 completes one cycle (of the synthesized signal) every $1/F_{ISB}$ seconds. Assuming that $F_{ISB} = 1$ Hz, counter 702 completes a cycle in one second. The time word (N bits, shown at 730) of time counter 702 is fed to phase multiplier 704, to which another control signal - an M-bit frequency word (shown at 732) ~ is fed, which represents the required synthesized frequency (f), Freq (shown at 731), which is represented by the M-bit frequency word (shown at 732) may have any binary value from 0 to $2^M$-1 Nevertheless, in order to satisfy Nyquist's Law, M shall be equal to, or less than, N-1.

Phase multiplier 704 multiplies the N-bit time word of time-counter 702 (which represents the lapsing time (t)), with 'Freq' (the M-bit frequency word representing the required synthesized frequency (f)), to obtain a phase word associated with the synthesized frequency. The larger is N the more phase points there are on a 360'-phase circle and consequently, the smaller the phase jump-size (and therefore the better the phase resolution). For example, for N=3 there are $2^3$=8 phase points with 360°/8 = 45° phase jump-size (0°, 45°, 90°, 135°, 180°, 225°, 270°, and 315°). Likewise, for N- 5 there are 32 phase prints with phase jump-size of 11.25°. The value of Freq remains substantially the same and changes only if it is required or desired to change the frequency of the synthesize signal.

The resulting product (shown at 733) may have a maximum of N+M bits. Since the product of f and t (f*t) represents the phase (the phase being w*t=2π f*t) and it is periodical in 2π (in radians, or 160 degrees), a modulus of the resulting product is taken (as shown by expression (5) below) to generate, or compute, a new control word:

$$i = \mathrm{mod}(f \cdot t, 2^N) \qquad\qquad (5)$$

In our example, the (N=) 27-bit time word (which represents the time t) and the (M=) 26-bit frequency word (which represents the frequency (f)) are multiplied by phase multiplier 704, and only the 27 binary Least Significant Bits (LSB) of the product are kept (the product being truncated by discarding the other bits), which is equivalent to the ap of a 27-bit (N= 27 in this example) modulus operator. Put differently, the va ue of "I" is not allowed to be greater than the maximal value obtainable by using (N=) 27 bits, Phase multiplier 704, therefore, outputs an N-bit phase word (at 733), which is utilized to access a corresponding entry in LUT Sin(x) 706 and a corresponding entry in LUT Cos(x) 708, and to calculate an error value, as is more fully described hereinafter. LU T Sin(x) 706 may include entries representative of a sinusoidal signal that is out-of-phase with respect of the sinusoidal signal represented by entries included in LUT Cos(x) 705

Now, the new word i in expression (5) can be used in the calculation process of the analog voltage output by DAC 714, as is shown in expression (6):

$$Sin\left(2 \cdot \pi \cdot \frac{i}{2^N}\right) \qquad\qquad (6)$$

where $0 \le \frac{i}{2_N} \le 1$ for tendering the function argument cyclic in the range 0 + 2π (in radians), or 0 + 360° (in degrees).

In cases where N is relatively small, a single LUT may be used to find corresponding Sine(w*t) values. However, N is normally large and, therefore, the implementation of a $2^N$ - entry LUT with, say 16-bit long words, will result in a large-size LUT and, therefore, in a complicated-to-handle and expensive LUT The size problem associated with the LUT (s) arises because it is desired, on one hand, to evaluate $Sin(2 \cdot \pi \cdot \frac{i}{2_N})$ for essentially every possible T. However, on the other hand, it is problematic to store all of the possible calculation results in a LUT(s) due to the impractical size of the resulting LUT table(s), If not all T values are accurately calculated, for example because of using poor approximation, the output signal of the frequency synthesizer will suffer from a large spurious; that is, the frequency synthesizer's spectral purity will be effected. Therefore, an algorithm may be used, in accordance with the present disclosure, for maintaining spectral purity, by storing only few values of i, with the respective calculation results of $Sin(2\pi\frac{i}{2_N})$ and using the relatively small number of stored values (of i and $Sin(2 \cdot \pi \cdot \frac{i}{2_N})$) to calculate un-stored i values and their respective $Sin(2 \cdot \pi \cdot \frac{i}{2_N})$ values, whereby to insure that essentially each cycle in the synthesizer's output signal is pure sinusoidal and it is essentially a precise replica of the other cycles in the synthesizer's output signal; that is, so long as the signal's frequency remains unchanged.

Assuming that it is wanted to calculate the value of Sin(y) where y=x+Δx, and the result of the Sin(x) is known and Δx is the difference between a stored value and an an-stored value that is to be calculate, the value of Sin(x+Δx) may be approximated using trigonometric expression (7):

$$Sin(x + \Delta x) = Sin(x) \cdot Cos(\Delta x) + Cos(x) \cdot Sin(\Delta x) \qquad (7)$$

The value of $\Delta x$ (the difference between a stored value and an un-stored value that is to be calculate) can be determined to be very small, for which reason it can be decided that $Cos(\Delta x)$ roughly equals 1.0 and $Sin(\Delta r)$ roughly equals $\Delta x$. Employing these assumptions on expression (7) yields expression (8):

$$Sin(x + \Delta x) \approx Sin(x) \cdot 1 + Cos(x) \cdot \Delta x + error(\Delta x^2) \qquad (8)$$

Since $\Delta x$ is assumed to be very small, $(\Delta x)^l$ is even smaller, for which reason the clause error($\Delta x^3$) in expression (8) can be discarded without detrimentally affecting the final result.

In the frequency generator of Fig. 7, the word i, which can have a maximal length of N bits, may be split into $N_1$ (MSB, shown at 734) and $N_2$ (=N - $N_{11}$ (LSB, shown at 735) Using $N_1$ (as a first portion of the N~bit phase word) a corresponding entry in LUT Sin(x) 706 and a corresponding entry in LUT Cos(x) 708 may be accessed (shown at 741 and 742, respectively), to obtain corresponding Sin(x) and Cos(x) values in relatively small sized LUTs, with only $2^{N1}$ lines or entries (instead of $2^N$ lines or entries) In our example, a 10-bit ($N_1$ =10) address word yields 1024 lines or entries in LL T Sin(x) 706 and 1024 lines or entries in LUT Cos(x) 708. The $N_2$ - bit word (which is a second portion of the N-bit phase word, shown at 735) may represent $\Delta r$ and is multiplied by phase error multiplier 710 with the corresponding value in an entry in LUT Ccs(x) 708, to obtain (shown at 7.36) a small correction factor to the sin ($2\pi \cdot \frac{1}{2}_N$) calculation (a phase-related error data).

The values of $N_1$ and $N_2$ are defined according to two considerations. On one hand $N_1$ should be kept as minimal as possible in order to keep LUT Sm(x) 706 as small as possible On the other hand, the value of $N_2$ (=N- $N_1$) should be also kept as minimal as possible in order to keep the approximation error ($\Delta x$) to a minimum. For a given application, the minimal usable, or allowable, value of $N_1$ may be obtained using mathematical simulation that will show the spurious signal level resulting from this approximation error ($\Delta x$). If the value of $N_1$ is smaller than the 'minimal usable value of $N_1$', the approximation in expression (8) will not suffice, which will result in a reconstructed output signal that will deviate from the ideal (pure), or nearly ideal, sinusoidal waveform. In the context of the present disclosure a non-ideal sinusoidal waveform introduces unwanted signals that are called 'spuriouses', After setting the value of $N_1$, the value of $N_2$ is set to be $N - N_1$ It has been found in simulations that, for many applications, a value of $N_1$ = 10 is more that sufficient, and that the resulting LUTs' size is minimal (2K-memory size, with 16-bit long digital words) in order to generate a digital signal corresponding to the required Sin(x+$\Delta x$) value approximation, as detailed in the approximation formula above, an adder (shown at 712) is used to sum up the digital Sin(x) data generated by LUT Sin(x) 706 with the output of error multiplies 710 that generates data that corresponds to the value of Cos(x) (generated by LUT Cos(x) 708) multiplied by the error factor $N_2$ which is the LSB part of the binary number received from phase multiplier 704. Now, the calculated voltage output (in digital format) of adder 712 is fed (shown at 737) to k-bit DAC 714 ('k' may be, for example, 16) which generates and outputs (shown at 738) an analog signal with the required frequency and phase. The analog signal output by k-bit DAC 714 is then fed (shown at 738) to reconstruction filter (LPF) 716, to reduce unwanted frequency harmonics and to maintain the resulting output signal (at 720) substantially at constant amplitude. In most practical cases, where the maximum frequency of the generated signal (at 720) is considerably lower than the frequency $F_{CLK}$ of the external clock, Reconstruction filter 716 may be relatively simple.

Referring now to Fig. 8, a high-level flowchart for generating a phase coherent signal is shown and described according to an embodiment of the present disclosure At step 801, a phase word is generated as described in connection with Fig. 7 A first portion of the phase word may be used for accessing, at step 802, an entry in Sin(x) and Cos(x) LLTs. A second portion of the phase word may be used to generate, at step 803, a phase-related error data. The phase-related error data, which may be obtained in the way described in connection with Fig. 7, may be added, at step 804, to a value stored in an entry of the Sin(x) LUT associated with (accessed using) the first portion of the phase word, whereby to generate a digital word from which a corresponding analog value of a sinusoidal may be generated, at step 805. After obtaining an analog value that corresponds to the current time instant, a following analog value may be likewise generated by repeating (shown as loop 810) steps 801 to 805. for the next time instant, which is specified by the time word generated by a time counter such as the time-counter 702 shown in Fig. 7.

The avowed goal of the present disclosure, of maintaining phase coherency when frequency changes occur in an output signal, is obtained because, regardless of the application of the M-bit control word (shown at 732 in Fig. 7) to set a designated or required frequency (shown at 731 in Fig. 7) and the instant(s) at which the M-bit control word is applied, the values of the signal's phase always equal $2\pi * f^*t$. The counter's (shown at 702 in Fig. 7) instantaneous value (within the designated counting range) represents the time elapsing from the activation of the time counter, and the elapsing time does not depend on frequency changes. For example, assuming that the output signal's frequency of a frequency synthesizer (such as frequency synthesizer 700) is initially set to $f1$ at time $t1$, the instantaneous phase of the output signal at instant t1 will be $2\pi^*f_1 *t_1$. Then, assuming that at instant t2 the frequency of the frequency synthesizer changes from f1 to f2, the instantaneous phase of the output signal at instant t2 will have a value $2\pi * f_2 *t_3$ that differs from the phase value at t2 associated with frequency f1 ( $2\pi^* f_1 *t_2$). Assuming that at instant t3 the frequency of the frequency synthesizer returns (changes back from f2) to f1, the instantaneous phase of the output signal at instant 13 will have a value $2\pi^* f_1 *t_3$ which is a value that would have been reached spontaneously, as if no frequency changes occurred from f1 to f2 and from f2 back to f1, In this manner, the novel DDS circuit disclosed in the present disclosure maintains the phase-coherency of the output signal.

While certain features of the disclosure have been illustrated and described herein, many modifications, substitutions, changes, and equivalents will now occur to those skilled in the art. It is, therefore, to be understood that the appended claims are intended to cover all such modifications and changes as fall within the true spirit of the disclosure.

**Claims**

1. A method of generating a sinusoidal signal, comprising:

   applying to an input of a digital-to-analog converter a value derived from an entry in a first lookup table and an entry from a second lookup table.

2. The method according to claim 1, wherein entries in the first and second tables represent values of a sinusoidal signal.

3. The method according to claim 2, wherein the sinusoidal signal represented by entries of The first lookup table is out-of-phase with respect of the sinusoidal signal represented by entries of the second lookup table.

4. The method according to claim 3, wherein an entry of the first lookup table and an entry of the second lookup table are accessed using a first portion of a phase word generated by a phase multiplier.

5. The method according to claim 4, wherein the phase word is obtained by multiplying a time word with a frequency word.

6. The method according to claim 4, wherein a second portion of the phase word is multiplied, by a phase error multiplier, with a corresponding entry in the second lookup table to obtain a phase-related error data that is added to an entry of the first lookup table to form the derived value.

7. The method according to claim 1, wherein the derived value is derived such that phase coherence of the sinusoidal signal is maintained when the frequency word or time word is changed.

8. An apparatus for generating a sinusoidal signal, comprising;

   a digital-to-analog converter adapted to receive a value derived from an entry in a first lookup table and an entry in a second lookup table.

9. The apparatus according to claim 8, wherein an entry of the first lookup table and an entry of the second lookup table are accessed using a first portion of a phase word.

10. The apparatus of claim 9, further comprising an adder for summing the first lookup table entry value and a phase-related error data to obtain the derived value

11. The apparatus of claim 10, further comprising:

    a phase multiplier adapted to generale the phase word, and
    a phase error multiplier adapted to generate the phase-related error data by multiplying a second portion of said phase word with a value in the second lookup table entry.

**12.** The apparatus of claim 11, wherein the phase multiplier generates the phase word by multiplying a time word with a frequency word.

**13.** The apparatus of claim 11, wherein the phase multiplier generates an N-bit phase word composed of N1-bit word as the phase word's first portion and N2 word as the phase word's second portion.

**14.** A method of generating a phase coherent signal comprising:

applying to an input of a digital-to-analog converter a value derived from an entry in a first lookup table and an entry in a second lookup table.

**15.** The method according to claim 15. wherein entries in the first and second tables represent values of a sinusoidal phase coherent signal.

**16.** The method according to claim 16, wherein the sinusoidal signal represented by entries of the first lookup table is out-of-phase with respect of the sinusoidal signal represented by entries of the second lookup table.

**17.** The method according to claim 17, wherein an entry of the first lookup table and an entry of the second lookup table are accessed using a first portion of a phase word that is generated by a phase multiplier.

**18.** The method according to claim 18, further comprising multiplying, by the phase multiplier, a time-counter word with a frequency word to generate the phase word.

**19.** The method according to claim 19. wherein a second portion of the phase word is multiplied, by a phase error multiplier, with a corresponding entry in the second lookup table to obtain a phase-related error data that is added to an entry of the first lookup table to form the derived value.

**20.** The method according to claim 15, wherein the derived value is derived such that phase coherence of the signal is maintained when the frequency word or time-counter word is changed.

*FIG.1*

*FIG.2*

*FIG.3*

*FIG.4*

FIG.5

*FIG.6*

*FIG.7*

EP 1 873 612 A1

START

801 — Generating a phase word

802 — Accessing sin(x) & cos(x) LUTs

803 — Generating Phase-Related Error Data (PRED)

804 — Deriving a value from PRED & Sin(x) LUT

805 — Generating an analog value according to derived value

810

FIG.8

**European Patent Office**

## EUROPEAN SEARCH REPORT

Application Number

EP 07 10 1550

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 975 699 A (FREY GARY D [US]) 4 December 1990 (1990-12-04) | 1-3, 8-10, 14-16 | INV. G06F1/03 G06F1/035 |
| Y | * the whole document * | 4-7, 11-13, 17-20 | |
| X | US 6 127 860 A (MARTIN DAVID G [US] ET AL) 3 October 2000 (2000-10-03) | 1-3, 8-10, 14-16 | |
| Y | * column 3, line 9 - line 12; figures 2-4 * | 4-7, 11-13, 17-20 | |
| Y | WAISBEIN M: "MULTIPLYING DIGITAL SYNTHESIZER" ELECTRONIC DESIGN, PENTON MEDIA, CLEVELAND, OH, US, vol. 48, no. 7, 3 April 2000 (2000-04-03), page 158, XP001075143 ISSN: 0013-4872 * the whole document * | 4-7, 11-13, 17-20 | |

TECHNICAL FIELDS SEARCHED (IPC)

G06F

The present search report has been drawn up for all claims

| Place of search | Date of completion of the search | Examiner |
|---|---|---|
| Munich | 5 September 2007 | Waters, Duncan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 1550

This annex lists the patent family members relating to the patent documents cited in  the above-mentioned European search report.
The members are as contained in the European Patent Office EDP file on
The European Patent Office is in no way liable for these particulars which are merely given for the purpose of information.

05-09-2007

| Patent document cited in search report | | Publication date | Patent family member(s) | Publication date |
|---|---|---|---|---|
| US 4975699 | A | 04-12-1990 | NONE | |
| US 6127860 | A | 03-10-2000 | NONE | |

EPO FORM P0459

For more details about this annex : see Official Journal of the European Patent Office, No. 12/82